# EUROPEAN PATENT APPLICATION

(11) **EP 3 447 710 A1**
(43) Date of publication of application: **27.02.2019**
(21) Application number: 18189971.7
(22) Date of filing: 21.08.2018
(51) Int. Cl.: G06Q 30/02

(54) **SERVER DEVICE AND METHOD FOR DETERMINING PROMOTION REWARD CONTENT TO BE GRANTED TO A CUSTOMER**

(30) Priority: 25.08.2017 JP 2017162587
(71) Applicant: Toshiba TEC Kabushiki Kaisha, Tokyo 141-8562 (JP)
(72) Inventor: KOMATSUBARA, Akira, Shinagawa-ku,, Tokyo 141-8562 (JP); YOSHINO, Yuichi, Shinagawa-ku,, Tokyo 141-8562 (JP)
(74) Representative: Takeuchi, Maya

(57) **Abstract**

A server according to an embodiment determines a reward based on a transaction. Promotion setting information includes, for each promotion for granting rewards to a customer: a condition under which the corresponding promotion is implemented, a reward content to be granted to the customer in connection with the corresponding promotion, and an application method indicating how the reward content is to be granted to the customer when the at least one condition of the corresponding promotion overlaps with the at least one condition of another promotion. A processor receives, from the POS device, transaction data corresponding to a transaction. The processor determines whether the transaction satisfies the stored condition for each promotion. When the transaction satisfies the condition for more than one promotion, the processor determines the total reward content based on the corresponding stored application method. The processor outputs reward information indicating the total reward content.

## Description

### FIELD

The present invention relates to the field of an information processing technology in general, and embodiments described herein relate in particular to a server device and a method for determining promotion reward content to be granted to a customer.

### BACKGROUND

Conventionally, in a retail store such as a supermarket, a service for granting a reward such as points to a customer registered as a member is provided for promoting sales and member registration. In the retail store, promotions such as a marketing campaign for the purpose of attracting a customer to visit the retail store are implemented at different times. For example, during the implementation of a promotion, the number of points to be granted is set to twice as much as a normal case.

In a retail store where the above-mentioned promotion is implemented, a manager (for example, a store manager) who manages the operation of the retail store sets a period during which the promotion is implemented and a reward content to be granted for each promotion. However, in a conventional art, as it is not particularly considered how plural promotions overlap with each other, it is difficult to set the combination of the promotions whose implementation periods overlap with each other. Thus, there is room for improvement in realizing various promotions.

### SUMMARY OF INVENTION

To solve such problem, there is provided a server for determining a reward based on a transaction, the server comprising:
a storage device that stores promotion setting information including, for each of a plurality of promotions for granting rewards to a customer:
   at least one condition under which the corresponding promotion is implemented,
   a reward content to be granted to the customer in connection with the corresponding promotion, and
   an application method indicating how the reward content is to be granted to the customer when the at least one condition of the corresponding promotion overlaps with the at least one condition of another promotion;
   a communication interface for communicating data with a point of sale (POS) device; and
   a processor programmed to:
      receive, from the POS device via the communication interface, transaction data corresponding to a transaction performed by the customer,
      determine, based on the received transaction data, whether the corresponding transaction satisfies the stored at least one condition for each of the plurality of promotions,
      when the transaction satisfies the stored at least one condition for more than one of the plurality of promotions, determine the total reward content to be granted for each promotion for which the corresponding at least one condition is satisfied, based on the corresponding stored application method, and
      output reward information indicating the total reward content for each promotion for which the corresponding at least one condition is satisfied.

Preferably, the reward content for each promotion is expressed quantitatively, and if the stored application method for one of the promotions for which the corresponding at least one condition is satisfied is a maximum application method, the processor determines that the total reward content for that promotion is the maximum reward content out of each promotion for which the corresponding at least one condition is satisfied.

Preferably still, if the stored application method for one of the promotions for which the corresponding at least one condition is satisfied is an individual application method, the processor determines that the total reward content for that promotion is the reward content stored for that promotion.

Preferably yet, the at least one condition includes an implementation period in which the promotion is to be implemented.

Suitably, the at least one condition includes attribute information of the customer.

Suitably still, the at least one condition includes a membership status of the customer.

Suitably yet, the processor outputs the reward information indicating the total reward content by updating a point account of the customer.

Typically, the processor outputs the reward information indicating the total reward content by transmitting information to the POS device causing the POS device to display information indicating an item corresponding to the total reward content.

Typically still, the processor outputs the reward information indicating the total reward content by transmitting information indicating a discount to be applied in settling the transaction.

Typically yet, the processor is further programmed to:
receive an instruction to update the promotion setting information, and
control the storage device to update the promotion setting information in accordance with the received instruction.

The invention also relates to a method for determining a reward based on a transaction, the method comprising:
storing promotion setting information including, for each of a plurality of promotions for granting rewards to a customer:
at least one condition under which the corresponding promotion is implemented,
a reward content to be granted to the customer in connection with the corresponding promotion, and
an application method indicating how the reward content is to be granted to the customer when the at least one condition of the corresponding promotion overlaps with the at least one condition of another promotion;
receive, from a point of sale (POS) device, transaction data corresponding to a transaction performed by the customer;
determining, based on the received transaction data, whether the corresponding transaction satisfies the stored at least one condition for each of the plurality of promotions;
when the transaction satisfies the stored at least one condition for more than one of the plurality of promotions, determining the total reward content to be granted for each promotion for which the corresponding at least one condition is satisfied, based on the corresponding stored application method; and
outputting reward information indicating the total reward content for each promotion for which the corresponding at least one condition is satisfied.

Preferably, in the method, the reward content for each promotion is expressed quantitatively, and
if the stored application method for one of the promotions for which the corresponding at least one condition is satisfied is a maximum application method, the total reward content for that promotion is determined to be the maximum reward content out of each promotion for which the corresponding at least one condition is satisfied.

Preferably still, in the method, if the stored application method for one of the promotions for which the corresponding at least one condition is satisfied is an individual application method, the total reward content for that promotion is determined to be the reward content stored for that promotion.

Preferably yet, in the method, the at least one condition includes an implementation period in which the promotion is to be implemented.

Suitably, in the method, the at least one condition includes attribute information of the customer.

Suitably still, in the method, the at least one condition includes a membership status of the customer.

Suitably yet, in the method, outputting the reward information indicating the total reward content includes updating a point account of the customer.

Typically, in the method, outputting the reward information indicating the total reward content includes transmitting information to the POS device causing the POS device to display information indicating an item corresponding to the total reward content.

Typically still, in the method, outputting the reward information indicating the total reward content includes transmitting information indicating a discount to be applied in settling the transaction.

Typically yet, the method further comprises:
receiving an instruction to update the promotion setting information; and
updating the stored promotion setting information in accordance with the received instruction.

The invention also concerns a non-transitory computer readable medium storing a program causing a computer to execute the method described above.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a diagram illustrating an example configuration of a store system according to an embodiment;
Fig. 2 is a perspective view illustrating a POS terminal according to the embodiment;
Fig. 3 is a diagram illustrating a hardware configuration of the POS terminal according to the embodiment;
Fig. 4 is a diagram illustrating a hardware configuration of a management server according to the embodiment;
Fig. 5 illustrates a data structure of a member master file according to the embodiment;
Fig. 6 is a diagram illustrating a hardware configuration of an operation terminal according to the embodiment;
Fig. 7 is a diagram illustrating functional components in the management server and the operation terminal according to the embodiment;
Fig. 8 illustrates a setting screen according to the embodiment;
Fig. 9 illustrates a data structure of a promotion master file according to the embodiment;
Fig. 10 illustrates a management screen according to the embodiment;
Fig. 11 illustrates another management screen according to the embodiment;
Fig. 12 is a diagram illustrating functional components in the POS terminal and the management server according to the embodiment;
Fig. 13 is a flowchart depicting a promotion setting process executed by the management server and the operation terminal according to the embodiment;
Fig. 14 is a flowchart depicting a promotion management process executed by the management server and the operation terminal according to the embodiment;
Fig. 15 is a flowchart depicting a reward granting process executed by the POS terminal and the management server according to the embodiment; and
Fig. 16 is a flowchart depicting a granted point deciding process executed by a reward granting section according to the embodiment.

### DETAILED DESCRIPTION

A server according to an embodiment determines a reward based on a transaction. A storage device stores promotion setting information including, for each of a plurality of promotions for granting rewards to a customer: at least one condition under which the corresponding promotion is implemented, a reward content to be granted to the customer in connection with the corresponding promotion, and an application method indicating how the reward content is to be granted to the customer when the at least one condition of the corresponding promotion overlaps with the at least one condition of another promotion. A communication interface communicates data with a point of sale (POS) device. A processor is programmed to receive, from the POS device via the communication interface, transaction data corresponding to a transaction performed by the customer. The processor determines, based on the received transaction data, whether the corresponding transaction satisfies the stored at least one condition for each of the plurality of promotions. When the transaction satisfies the stored at least one condition for more than one of the plurality of promotions, the processor determines the total reward content to be granted for each promotion for which the corresponding at least one condition is satisfied, based on the corresponding stored application method. The processor outputs reward information indicating the total reward content for each promotion for which the corresponding at least one condition is satisfied.

Hereinafter, a server device and a method for determining reward content to be granted to a customer according to an embodiment will be described with reference to the accompanying drawings. In the following embodiment, a store system provided in a retail store such as a supermarket is described; however, the present invention is not limited thereto.

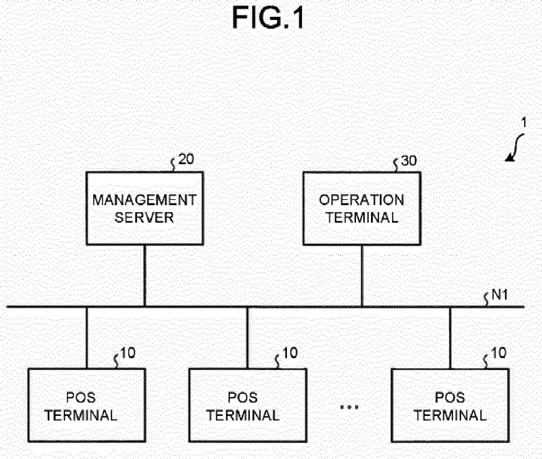

Fig. 1 is a diagram illustrating a configuration of a store system 1 according to the present embodiment. As shown in Fig. 1, the store system 1 includes a point of sale (POS) terminal 10, a management server 20, and an operation terminal 30. The POS terminal 10, the management server 20 and the operation terminal 30 are connected with each other via a network N1. The network N1 is, for example, a LAN (Local Area Network), a WAN (Wide Area Network), or the like. The number of the POS terminals 10 and the operation terminals 30 which are connected to the network N1 is not particularly limited.

The POS terminal 10 is an example of a sales data processing apparatus. The POS terminal 10 executes a process relating to registration and settlement of a commodity purchased by a customer in response to an operation by an operator such as a store clerk.

The management server 20 is an example of a server device. The management server 20 cooperates with the POS terminal 10 to provide a service for granting a reward such as points to a customer registered as a member (hereinafter, also referred to as a member). The management server 20 supports setting and management of a promotion such as a marketing campaign, and cooperates with the POS terminal 10 to implement the set promotion. In the present embodiment, the management server 20 is realized by one server device; however, the present invention is not limited thereto, for example, the management server 20 may be a cloud server or the like realized by cooperation of a plurality of server devices.

The operation terminal 30 is an information processing apparatus operated by a user (for example, a store manager) who performs setting and management of the promotion. The operation terminal 30 may be, for example, a stationary information processing apparatus such as a PC (Personal Computer), or a portable information processing apparatus such as a tablet terminal or a smartphone.

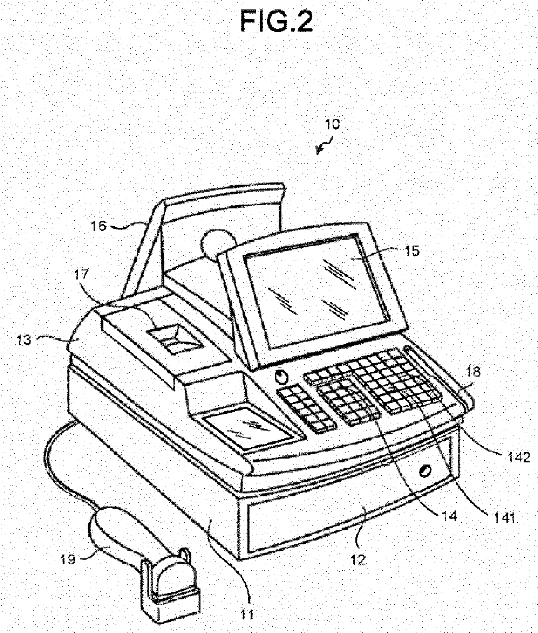

Fig. 2 is a perspective view illustrating the POS terminal 10. The POS terminal 10 is mounted on a drawer 11, and can control an opening operation of a cash drawer 12 of the drawer 11. The drawer 11 stores cash received from a customer, cash used for change, and the like. The POS terminal 10 may be provided with an automatic change machine instead of or in conjunction with the drawer 11. A main body housing 13 of the POS terminal 10 includes a keyboard 14 and a first display device 15 on right side of the upper surface thereof.

The keyboard 14 includes various keys for operating the POS terminal 10. The keyboard 14 includes, for example, a closing key 141 and a cash total key 142. The closing key 141 is an operator for instructing an end of sales registration described later. The cash total key 142 is an operator for instructing start of a settlement process described later.

The first display device 15 is a touch panel display on which a touch panel is provided on a display surface thereof. The first display device 15 displays, for example, a screen mainly seen by a store clerk who is the operator. The main body housing 13 is provided with a second display device 16 at a rear portion of the upper surface thereof. The second display device 16 is a touch panel display on which a touch panel is provided on a display surface thereof. The second display device 16 displays, for example, a screen mainly seen by a customer who purchases a commodity.

The POS terminal 10 is provided with a printing device 17 on the upper left side of the main body housing 13. The printing device 17 is a printer that prints a receipt for each transaction on a sheet. The sheet is an example of a printing medium. The sheet may be a roll paper wound into a roll shape or may be one sheet from a stack of sheets.

The POS terminal 10 includes a card reader 18 in a slot on the right side surface of the main body housing 13. The card reader 18 reads a member code for identifying a customer from a recording medium such as a membership card possessed by the customer. In the present embodiment, it is assumed that the membership card storing a unique member code is distributed in advance to a customer registered as a member.

Further, the POS terminal 10 is provided with a hand-held scanner 19. The scanner 19 reads a commodity code capable of identifying a commodity from a code symbol attached to the commodity.

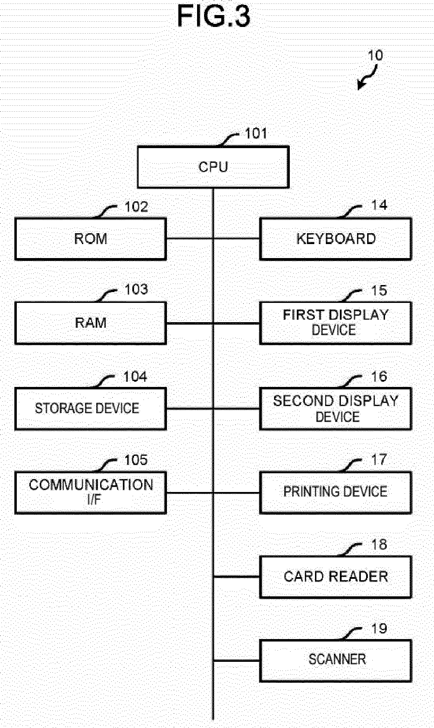

Fig. 3 is a diagram illustrating a hardware configuration of the POS terminal 10. The POS terminal 10 includes a CPU (Central Processing Unit) 101, a ROM (Read Only Memory) 102, a RAM (Random Access Memory) 103, a storage device 104, a communication interface (I/F) 105, the keyboard 14, the first display device 15, the second display device 16, the printing device 17, the card reader 18, and the scanner 19.

The CPU 101 is an example of a processor, and executes a program stored in the ROM 102 or the storage section 104 to collectively control the operation of the POS terminal 10. The ROM 102 stores various programs executable by the CPU 101 and data. The RAM 103 temporarily stores various programs and rewrites various data. The CPU 101 executes a program stored in the ROM 102 or the storage device 104 by using the RAM 103 as a work area.

The storage device 104 is a HDD (Hard Disk Drive), a SSD (Solid State Drive) or the like. The storage device 104 stores programs executable by the CPU 101 and various setting information. The storage device 104 stores a commodity master file (not shown) in which information relating to each commodity is stored. The commodity master file stores commodity information such as a commodity name, a unit price, a category and the like of the commodity in association with a commodity code capable of identifying each commodity sold at the retail store.

The communication I/F 105 is used for communicating with each device connected to the network N1. Under the control of the CPU 101, the communication I/F 105 transmits and receives various data to and from the management server 20 connected to the network N1.

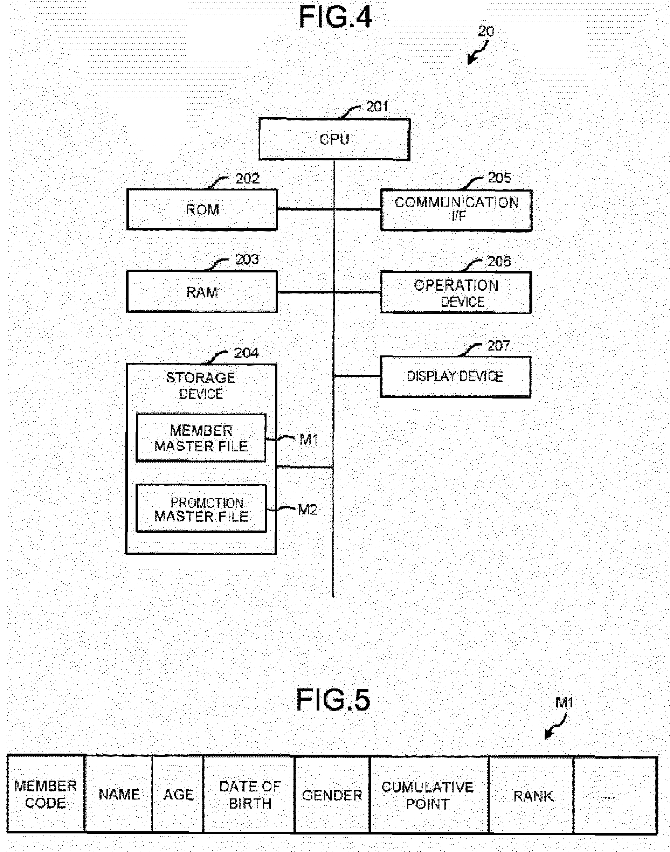

Fig. 4 is a diagram illustrating a hardware configuration of the management server 20. The management server 20 includes a CPU 201, a ROM 202, a RAM 203, a storage device 204, a communication I/F 205, an operation device 206, and a display device 207.

The CPU 201 is an example of a processor, and executes a program stored in the ROM 202 or the storage section 204 to collectively control the operation of the management server 20. The ROM 202 stores various programs executable by the CPU 201 and data. The RAM 203 temporarily stores various programs and rewrites various data. The CPU 201 executes a program stored in the ROM 202 or the storage section 204 by using the RAM 203 as a work area.

The storage device 204 is a HDD, a SSD or the like. The storage device 204 stores programs executable by the CPU 201 and various setting information. The storage device 204 stores a member master file M1 for storing information relating to a member. The member master file M1 stores information relating to the member in association with a member code for identifying each member. The storage section 204 also stores a promotion master file M2 for storing setting information relating to a promotion.

Fig. 5 illustrates an example data structure of the member master file M1. As shown in Fig. 5, the member master file M1 stores information such as a name, an age, date of birth, a gender, etc. of each member in association with the member code of the member. The member master file M1 stores a cumulative value (cumulative point) of points granted to each member in association with the member code of the member. The member master file M1 stores a rank of each member in association with the member code for identifying the member. Here, the rank of the member indicates a class of the member divided according to a purchase record of the customer or the like.

The data structure of the member master file M1 is not limited to that in Fig. 5. For example, the member master file M1 may store an anniversary such as a wedding anniversary of each member in association with the member code of the member. The member master file M1 may store, as history information, a date and time when points are granted and a date and time when the points are used in association with the member code.

Returning again to Fig. 4, the communication I/F 205 is used for communicating with each device connected to the network N1. Under the control of the CPU 201, the communication I/F 205 transmits and receives various data between the POS terminal 10 and the management server 20 connected to the network N1.

The operation device 206 includes an input device such as a keyboard and a pointing device. The operation device 206 notifies the CPU 201 of a signal corresponding to an operation content received via the input device. The display device 207 is a display such as a liquid crystal display. The display device 207 displays various information under the control of the CPU 201.

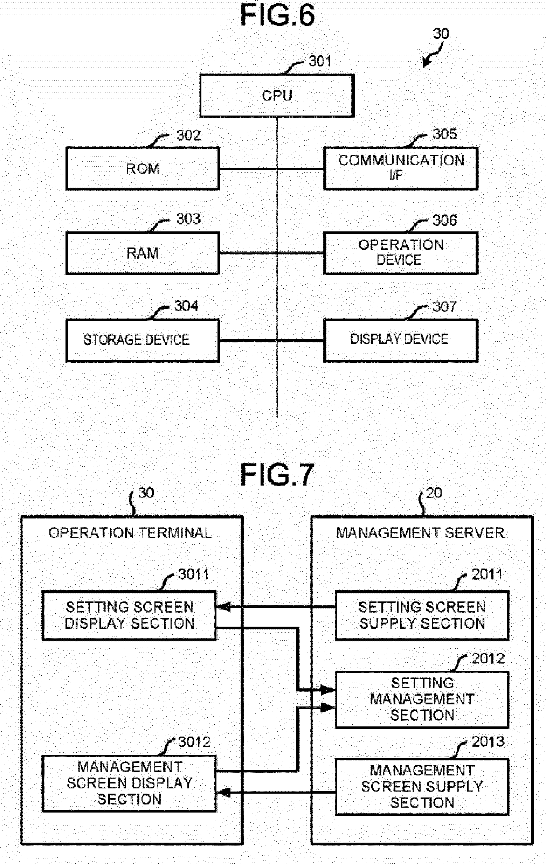

Fig. 6 is a diagram illustrating a hardware configuration of the operation terminal 30. The operation terminal 30 includes a CPU 301, a ROM 302, a RAM 303, a storage device 304, a communication I/F 305, an operation device 306, and a display device 307.

The CPU 301 is an example of a processor and executes a program stored in the ROM 302 or the storage device 304 to comprehensively control the operation of the operation terminal 30. The ROM 302 stores various programs executable by the CPU 301 and data. The RAM 303 temporarily stores various programs and rewrites various data. The CPU 301 executes a program stored in the ROM 302 or the storage device 304 by using the RAM 303 as a work area.

The storage device 304 is a HDD, a SSD or the like. The storage device 304 stores programs executable by the CPU 301 and various setting information. The communication I/F 305 is used for communicating with each device connected to the network N1. Under the control of the CPU 301, the communication I/F 305 transmits and receives various data to and from the management server 20 connected to the network N1.

The operation device 306 includes an input device such as a keyboard and a pointing device. The operation device 306 notifies the CPU 301 of a signal corresponding to an operation content received via the input device. The display device 307 is a display such as a liquid crystal display. The display device 307 displays various information under the control of the CPU 301. The display device 307 may be a touch panel, and in this case, the touch panel of the display section 307 functions as the operation device 306.

Next, functional components of the above-described POS terminal 10, the management server 20 and the operation terminal 30 are described. First, the functional components relating to the setting and management of the promotion are described.

Fig. 7 is a diagram illustrating functional components relating to the setting and management of the promotion in the management server 20 and the operation terminal 30.

The CPU 201 of the management server 20 retrieves the program stored in the storage device 204 on the RAM 203 and executes it to realize respective functional sections shown in Fig. 7. Specifically, the management server 20 includes a setting screen supply section 2011, a setting management section 2012, and a management screen supply section 2013 as functional sections. The CPU 301 of the operation terminal 30 retrieves the program stored in the storage device 304 in the RAM 303 and executes it to realize respective functional sections shown in Fig. 7. Specifically, the operation terminal 30 includes a setting screen display section 3011 and a management screen display section 3012 as functional sections.

The setting screen supply section 2011 of the management server 20 is realized by, for example, a Web server program or the like. The setting screen supply section 2011 supplies a setting screen for supporting setting (new creation) of a promotion to the operation terminal 30. Specifically, the setting screen supply section 2011 cooperates with the setting screen display section 3011 of the operation terminal 30 which accesses the management server 20 to display the setting screen on the display section 307 of the operation terminal 30.

The setting screen display section 3011 of the operation terminal 30 is realized by, for example, a Web client program or the like. The setting screen display section 3011 accesses the management server 20 through the communication I/F 305. The setting screen display section 3011 displays, on the display device 307, the setting screen supplied from the setting screen supply section 2011 of the management server 20.

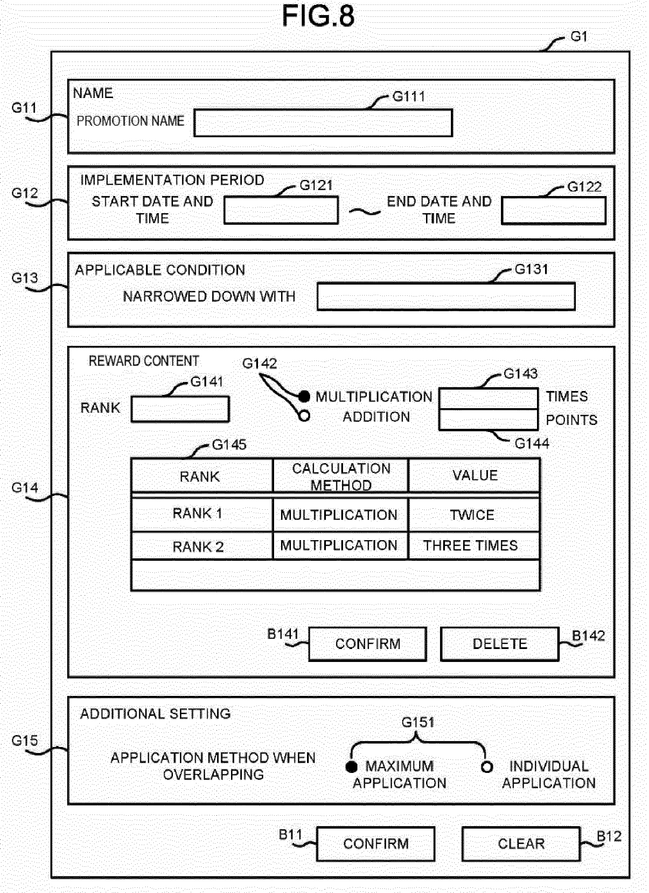

Fig. 8 illustrates an example of the setting screen. As shown in Fig. 8, a setting screen G1 has a name region G11, an implementation period region G12, an applicable condition region G13, a reward content region G14, an additional setting region G15, and the like.

The name region G11 has a name input region G111 in which a promotion identifier such as a promotion name can be input. A user who operates the operation terminal 30 can input a desired promotion identifier in the name input region G111.

The implementation period region G12 is used for setting a period for executing the promotion. Specifically, the implementation period section G12 has a start date and time input region G121 in which a start date and time can be set, and an end date and time input region G122 in which an end date and time can be set. The user who operates the operation terminal 30 can set the implementation period of the promotion by inputting a desired date and time in the start date and time input region G121 and a desired date and time in the end date and time input region G122.

The setting method of the implementation period is not limited to the above example. For example, a GUI (Graphical User Interface) may be provided which is capable of setting the implementation period of the promotion in units of months (e.g., every April), weeks (e.g., second week of every month), days (e.g., every Thursday), dates (e.g., first day of every month), or time (e.g., 12 o'clock to 13 o'clock every day). A GUI capable of setting the implementation period based on a specific day such as a birthday or a wedding anniversary may be provided. Thus, for example, if the birth month (or birthday) is set as a reference date, a period of 10 days before and after this birth month (or birthday) may be set as the implementation period of the promotion. For example, based on the wedding anniversary, the period of three days before and after the wedding anniversary may be set as the implementation period of the promotion.

Further, the implementation period is not limited to being set by designating the date and time. For example, a GUI capable of setting the implementation period of the promotion based on information obtained from weather information, sport game results or the like may be provided. In this case, a period during which it is raining or a period during which the air temperature reaches a predetermined value or more may be set as the implementation period of the promotion. A next day after a specific team wins may be set as the implementation period of the promotion. The weather information and the game result are acquired from an external device that distributes news and the like.

The applicable condition region G13 is used for setting conditions for narrowing down the target person to whom the reward is granted. Specifically, the applicable condition region G13 has a condition input region G131 capable of setting a narrowed condition. The user who operates the operation terminal 30 can narrow down the target person to whom the promotion is applied by inputting the narrowed condition in the condition input region G131. Here, in the condition input region G131, for example, it is possible to input attributes of the member such as gender and age group. It is assumed that if there is not narrowed condition in the condition input region G131, all members can be the target persons.

The narrowed condition is not limited to the attribute of the member, and other conditions may be set. For example, by setting a commodity code of a specific commodity, it is possible to narrow down the target person to a customer who purchases the specific commodity. For example, by setting an amount as a threshold value, it is possible to narrow down the target person to the customer who purchases commodities, and the total amount of which reaches the threshold value.

The reward content region G14 is used for setting the reward content to be granted in the promotion. Specifically, the reward content region G14 includes a rank input region G141 capable of inputting a rank of the member, a calculation method region G142 capable of inputting a calculation method of the points, a multiplying factor input region G143 capable of inputting a multiplying factor, and a fixed value input region G144 capable of inputting a fixed value.

The rank input region G141 is configured so that the rank of the member can be input therein. The user who operates the operation terminal 30 can input a specific rank or all members uniformly (without rank designation) via the rank input region G141.

The calculation method region G142 is configured so that the calculation method of the point to be granted as the reward can be input therein. The user who operates the operation terminal 30 can input (select) multiplication or addition via the calculation method region G142. The multiplying factor input region G143 is used for inputting a multiplication value when the multiplication is selected as the calculation method. For example, when "2" is input to the multiplying factor input region G143, a point value twice as much as a point value normally granted is granted. The fixed value input region G144 is used for inputting an added value when the addition is selected as the calculation method. For example, when "50" is input in the fixed value input region G144, a point value obtained by adding 50 points to the normally granted point value is granted.

The reward content region G14 has a setting confirmation region G145, a confirming button B141, and a deletion button B142. The confirming button B141 is an operator for instructing confirmation of the contents input in the rank input region G141, the calculation method region G142, the multiplying factor input region G143 and the fixed value input region G144. If the confirming button B141 is operated, the setting screen display section 3011 displays the contents input in the rank input region G141, the calculation method region G142, the multiplying factor input region G143 and the fixed value input region G144 in the setting confirmation region G145. In Fig. 8, an example is shown in which a multiplying factor "twice" is set for a member of rank 1, and a multiplying factor "three times" is set for a member of rank 2. Thus, in the reward content region G14, it is possible to set specific contents for each member rank.

The deletion button B142 is an operator for deleting the set reward content. If an operation on the deletion button B142 is received in a state in which one or a plurality of specific contents are selected from specific contents displayed in the setting confirmation region G145, the setting screen display section 3011 deletes the selected specific content from the setting confirmation region G145.

In the present embodiment, either the multiplication or the addition can be selected as the calculation method of the point; however, the calculation method is not limited thereto, for example, other calculation methods may be select.

The additional setting region G15 is used for inputting an additional setting relating to the promotion. Specifically, the additional setting region G15 has an application method region G151 in which an application method when the promotion to be implemented overlaps with another promotion can be set. Here, a maximum application or an individual application can be input in the application method region G151.

The maximum application refers to an instruction for applying one promotion for granting the maximum reward content (point value to be granted) from the overlapped promotions (the application method of which is "maximum application"). The individual application refers to an instruction for applying the reward content of the promotion to be implemented regardless of another overlapped promotion. The user who operates the operation terminal 30 can input (select) the maximum application or the individual application via the application method region G151.

In the present embodiment, either of the maximum application and the individual application can be selected as the application method at the time of overlap. However, the application method is not limited thereto, and other application methods may be selected. For example, the application method may be a minimum application for instructing application of one promotion for granting the minimum reward content (point value to be granted). It is preferable that the application methods that are inconsistent with each other, such as the maximum application and the minimum application, are preferentially applied by setting priority degree for the application methods.

An item that can be set in the additional setting region G15 is not limited to the above application method. For example, a GUI capable of setting an upper limit value of a point (hereinafter referred to as a granted point) to be granted to a customer who performs the transaction may be provided. In this case, the upper limit value of the granted point can be set to any value.

The setting screen G1 has a confirming button B11 and a clear button B12. The confirming button B11 is an operator for instructing that various setting information input in the name region G11, the implementation period region G12, the applicable condition region G13, the reward content region G14 (setting confirmation region G145), and the additional setting region G15 as setting information of one promotion. If the confirming button B11 is operated, the setting screen display section 3011 transmits various information set in the name region G11, the implementation period region G12, the applicable condition region G13, the reward content region G14 (setting confirmation region G145), and the additional setting region G15 as promotion setting information to the management server 20. If the clear button B12 is operated, the setting screen display section 3011 erases data value input to the setting screen G1.

The setting management section 2012 of the management server 20 registers the promotion setting information to the promotion master file M2 and manages the promotion setting information stored in the promotion master file M2. The setting management section 2012 registers the promotion setting information in the promotion master file M2 in the storage section 204 if the promotion setting information is transmitted from the operation terminal 30.

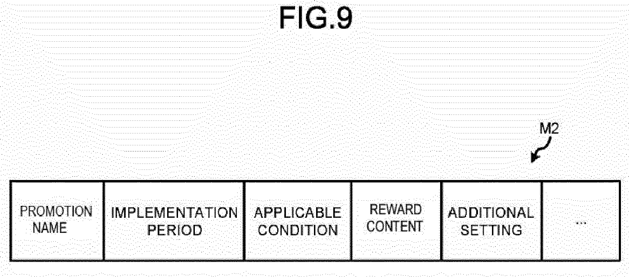

Fig. 9 illustrates an example data structure of the promotion master file M2. As shown in Fig. 9, the promotion master file M2 has data items such as the promotion name, the implementation period, the applicable condition, the reward content, the additional setting, and the like. The setting management section 2012 registers various settings such as the promotion name, the implementation period, the applicable condition, the reward content, and the additional setting contained in the promotion setting information in association with corresponding data items in the promotion master file M2.

The management screen supply section 2013 of the management server 20 is realized by a Web server program or the like, which is similar to the setting screen supply section 2011. The management screen supply section 2013 supplies a management screen for supporting management of the promotion setting information registered in the promotion master file M2 to the operation terminal 30. Specifically, the setting screen supply section 2011 cooperates with the management screen display section 3012 of the operation terminal 30 that accesses the management server 20 to display the management screen on the display device 307 of the operation terminal 30.

The management screen display section 3012 of the operation terminal 30 is realized by a Web client program or the like, which is similar to the setting screen display section 3011. The management screen display section 3012 accesses the management server 20 via the communication I/F 305. The management screen display section 3012 acquires the management screen supplied from the management screen supply section 2013 of the management server 20 and displays the management screen on the display device 307.

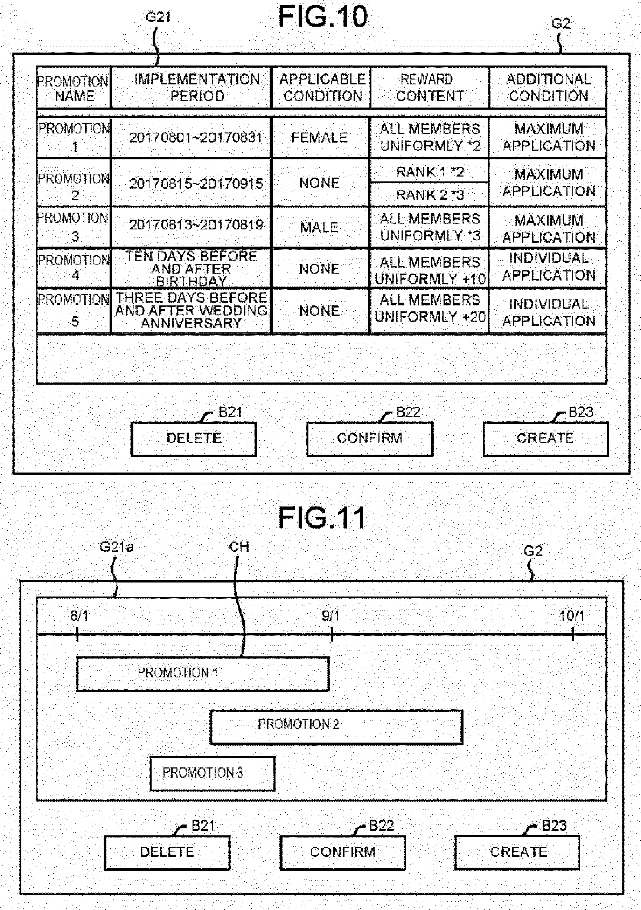

Fig. 10 illustrates an example of the management screen. As shown in Fig. 10, the management screen G2 has a display area G21 for listing each item of the promotion setting information registered in the promotion master file M2. In the display area G21, various settings of the promotion name, the implementation period, the applicable condition, the reward content, and the additional setting contained in the promotion setting information of each promotion are listed in an associated manner. Thus, in the management screen G2, each item of the promotion setting information is displayed for comparison. An order of the promotion setting information displayed on the management screen G2 is not specifically specified. For example, the management screen display section 3012 may display the promotion setting information in an order in which they are registered earlier, or display the promotion setting information in an order from the one for which the period set in the granting condition is closest to the current date and time.

The management screen G2 has a deletion button B21, a confirming button B22, and a creation button B23. The deletion button B21 is an operator for deleting the promotion setting information. The management screen display section 3012 erases the selected promotion setting information from the management screen G2 if an operation on the deletion button B21 is received in a state in which one or a plurality of the promotion setting information is selected from the management screen G2. The management screen display section 3012 sends instruction information for instructing deletion of the selected promotion setting information to the management server 20. If the instruction information for instructing deletion is received from the operation terminal 30, the setting management section 2012 of the management server 20 deletes the instructed promotion setting information from the promotion master file M2.

The confirming button B22 is an operator for confirming an editing operation performed on the promotion setting information. The user can change the setting content of the promotion setting information which is listed with the operation section 306, and by operating the confirming button B22 after changing the setting content, the changed setting content can be reflected. If the operation on the confirming button B22 is received, the management screen display section 3012 transmits the instruction information for instructing the promotion setting information to be changed and the changed setting content to the management server 20. If the instruction information for instructing the change in the setting content is received from the operation terminal 30, the setting management section 2012 of the management server 20 replaces the setting content of the instructed promotion setting information with the changed setting content.

On condition that one promotion setting information or an item in the implementation period is selected, the management screen display section 3012 may display an editing screen capable of changing the setting content of the promotion setting information and the selected item on the display section 307. Such an editing screen may have, for example, the same screen layout as the setting screen G1, or it may be a setting region of the selected item (for example, an implementation period region G12). The editing screen may be displayed in the same screen as the management screen G2 (display area G21), or may be displayed in a switchable manner with the management screen G2.

The creation button B23 is an operator for instructing the new creation of a promotion. If an operation on the creation button B23 is received, the management screen display section 3012 cooperates with the setting screen display section 3011 to display the setting screen G1 described above on the setting screen display section 3011. In this case, the setting screen G1 may be displayed on the same screen as the management screen G2 (display area G21), or may be displayed in a switchable manner with the management screen G2.

A display form of the display area G21 is not limited to the example shown in Fig. 10. For example, as shown in Fig. 11, the management screen display section 3012 may display a screen on which the implementation period of the promotion corresponding to the promotion setting information is displayed in a chart form based on the implementation period contained in the promotion setting information.

Here, Fig. 11 illustrates another management screen. As shown in Fig. 11, the management screen G2 has a display area G21a. In the display area G21a, a list of the promotion setting information registered in the promotion master file M2 is displayed. Here, a chart CH is displayed in association with the promotion setting information. The chart CH represents a length of the implementation period contained in the promotion setting information of each promotion on a time axis. In this manner, by displaying the implementation period set in the promotion setting information in the chart format, it is possible to easily confirm the time-series overlapping state of each promotion.

The management screen display section 3012 may display the display area G21 and the display area G21a in a switchable manner. The management screen display section 3012 may extract the promotion setting information in which the "maximum application" is set as the application method to display it in the display area G21a. The management screen display section 3012 may display the promotion setting information with different application methods in an identifiable manner by making the display forms such as display colors and the like thereof different from each other.

In this way, the management server 20 and the operation terminal 30 provide the GUI for supporting the setting and management of the promotion for the user of the operation terminal 30. As a result, the user can easily set and manage the promotion via the operation terminal 30.

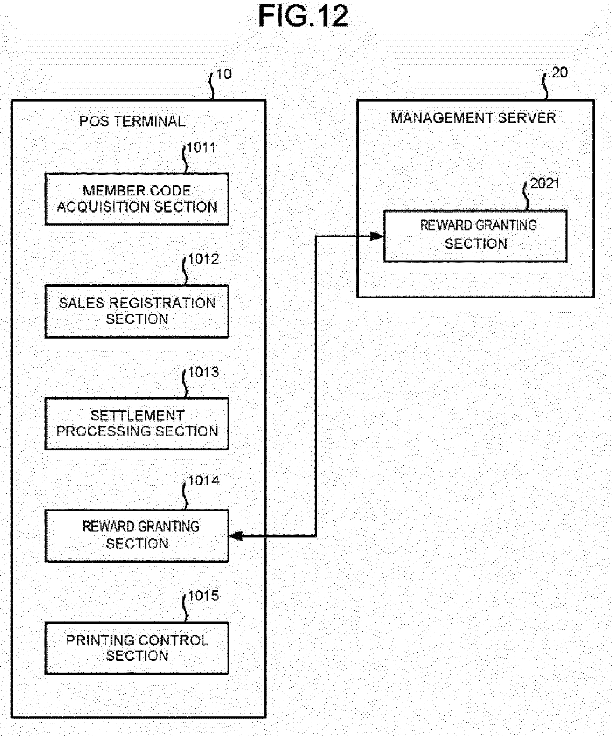

Next, the functional components relating to the implementation of the promotion set in the promotion master file M2, i.e., the functional components relating to the granting of reward is described. Fig. 12 is a diagram illustrating the functional components relating to the granting of the reward in the POS terminal 10 and the management server 20.

The CPU 101 of the POS terminal 10 retrieves the program stored in the storage device 104 on the RAM 103 and executes it to realize respective functional sections shown in Fig. 12. Specifically, the POS terminal 10 includes a member code acquisition section 1011, a sales registration section 1012, a settlement processing section 1013, a reward granting section 1014, and a printing control section 1015.

The member code acquisition section 1011 acquires a member code from a recording medium such as the membership card possessed by the customer. For example, if the member code is read from the recording medium by the card reader 18, the member code acquisition section 1011 acquires the member code from the card reader 18.

The sales registration section 1012 performs the sales registration of a commodity purchased by the customer. For example, if the commodity code is read from a code symbol attached to the commodity by the scanner 19, the sales registration section 1012 specifies the commodity identified by the commodity code from the commodity master file and performs the sales registration for the commodity. The sales registration section 1012 calculates a commodity amount (unit price*quantity) of each commodity and a total amount for totaling (or subtotaling) the commodity amount, based on the unit price and the quantity of the commodity on which the sales registration is performed. The sales registration refers to a process of storing the commodity code of the specified commodity in the RAM 103 in association with a purchase quantity of the commodity and the commodity amount of the commodity.

The settlement processing section 1013 executes a settlement process on the commodity based on the sales data of the commodity on which the sales registration is performed. For example, the settlement processing section 1013 executes a settlement process for settling the total amount of all commodities subjected to the sales registration with an amount (payment amount) paid by the customer in response to an operation on the cash total key 142. The settlement processing section 1013 calculates a change amount by subtracting the total amount from the payment amount.

The reward granting section 1014 cooperates with a reward granting section 2021 described later of the management server 20 to grant a reward to a customer (member) who performs a transaction with the POS terminal 10. Specifically, the reward granting section 1014 generates transaction information including the commodity code and the total amount of each commodity subjected to the sales registration in one transaction and the acquired member code, and sends the transaction information to the management server 20. The reward granting section 1014 then grants the customer who performs the transaction the points notified from the management server 20 as a response to the transaction information. Here, the transaction refers to the sales registration and the settlement process that are performed for one customer (member). The transaction information may include other information such as a transaction date and time indicating a date and time when the transaction is performed.

The printing control section 1015 generates receipt data indicating a transaction content of the transaction. Then, the printing control section 1015 outputs a receipt showing the content of one transaction by printing the generated receipt data with the printing section 17.

Here, the receipt data generated by the printing control section 1015 includes a store name in which the transaction is performed, a date and time, a transaction number for identifying the transaction and the like, in addition to details of each commodity for which the sales registration is performed in one transaction and the content (total amount, payment amount, change amount, etc.) of the settlement process of the commodity. The receipt data includes the points granted by the reward granting section 1014 (reward granting section 2021).

In a case in which the printing method of the points is notified together with the points to be granted as a response to the transaction information, the printing control section 1015 prints the points with the notified printing method. For example, in a case in which a printing method for separately printing special points and basic points is notified, the printing control section 1015 prints the point on the receipt in a state in which the special points and the basic points are separated. For example, when the printing method for printing a sum of the special points and the basic points is notified, the printing control section 1015 prints the sum of the special points and the basic points on the receipt.

On the other hand, the CPU 201 of the management server 20 retrieves the program stored in the storage section 204 on the RAM 203 and executes it to realize respective functional sections shown in Fig. 12. Specifically, the management server 20 includes the reward granting section 2021 as the functional section.

The reward granting section 2021 is an example of a first determination module, a second determination module, a decision module, and a granting module. The reward granting section 2021 cooperates with the reward granting section 1014 of the POS terminal 10 to grant a reward to a customer (member) who performs the transaction with the POS terminal 10. Specifically, the reward granting section 2021 determines whether or not the transaction performed with the POS terminal 10 satisfies conditions of the promotion set in the promotion master file M2 based on the transaction information transmitted from the POS terminal 10 (reward granting section 1014).

For example, the reward granting section 2021 determines whether or not there is a promotion being implemented in the transaction date and time by determining whether or not the transaction date and time contained in the transaction information satisfies the condition of the implementation period contained in the promotion setting information. The reward granting section 2021 reads out the member information associated with the member code included in the transaction information from the member master file M1 and determines whether or not the characteristics such as gender, age, etc. contained in the member information satisfy the applicable condition contained in the program setting information. If a period based on a specific day such as birthday is set in the implementation period of the promotion setting information, the reward granting section 2021 determines whether or not the promotion is implemented based on the date of the specific day contained in the member information.

The reward granting section 2021 determines whether or not there are plural promotions if it is determined that there is the promotion setting information (promotion) that satisfies the condition of the implementation period and the applicable condition described above. Here, if there is one promotion that satisfies the condition, the reward granting section 2021 decides the points (granted points) to be granted to the member based on the reward content of the promotion setting information. Specifically, the reward granting section 2021 calculates the basic points based on the total amount included in the transaction information. Here, the calculation method of the basic points is preset. For example, the reward granting section 2021 may calculate the basic points by multiplying the total amount by a predetermined rate.

Then, the reward granting section 2021 calculates the granted points based on the basic points and the reward content of the promotion setting information. For example, if a multiplying factor of two is set in the reward content, the reward granting section 2021 sets a value obtained by doubling the basic points as the granted points. For example, if addition of 50 points is set in the reward content, the reward granting section 2021 sets a value obtained by adding 50 points to the basic points as the granted points. The value obtained by subtracting the basic points from the granted points is the points (special points) granted due to the promotion.

If there are plural promotions satisfying the condition, the reward granting section 2021 determines the granted points based on the application method included in the promotion setting information of those promotions. Specifically, the reward granting section 2021 determines whether or not there is a promotion in which "individual application" is set among a plurality of the promotions (the promotion setting information) satisfying the condition. If there is the promotion in which the "individual application" is set, the reward granting section 2021 calculates a first granted point amount for each corresponding promotion. The first granted point amount can be calculated in the same way as the granted points described above. If no promotion in which the "individual application" is set exists, the reward granting section 2021 sets the first granted point to zero.

The reward granting section 2021 determines whether or not there is a promotion in which the "maximum application" is set among the plurality of the promotions satisfying the condition. If there is the promotion in which the "maximum application" is set, the reward granting section 2021 calculates a second granted point amount for each corresponding promotion. The second granted point amount can be calculated in the same way as the granted points described above. Then, the reward granting section 2021 selects one second granted point amount with maximum from the calculated second granted points. If no promotion corresponding to the promotion setting information in which the "maximum application" is set exits, the reward granting section 2021 sets the second granted points to zero.

If the first granted points and the second granted points are calculated, the reward granting section 2021 calculates (decides) the point obtained by adding the calculated first granted points to the calculated second granted points as the granted points.

At the time of adding the first granted points to the second granted points, it is preferable to perform control so that the computation for the basic points is not carried out repeatedly. For example, if there are plural promotions in which "multiplication" is set as the calculation method, the reward granting section 2021 multiplies the basic points by a value obtained by adding or multiplying the multiplying factors of respective promotions which are set as the multiplication values. If there are plural promotions in which "addition" is set as the calculation method, the reward granting section 2021 adds the total value of the points set as the fixed value to the basic points. For example, in a case in which there are promotions in which "multiplication" and "addition" are set as the calculation methods, the reward granting section 2021 adds the points calculated for the promotion with the "addition" as the calculation method to the points calculated for the promotion with the "multiplication" as the calculation method.

Upon calculating the granted points, the reward granting section 2021 searches the member master file M1 for a data entry corresponding to the member code included in the transaction information, and adds the granted points to the cumulative points of the searched data entry. The reward granting section 2021 then notifies the POS terminal 10 transmitting the transaction information of the calculated granted point. If there is not a promotion of which the promotion setting information satisfies the condition of transaction information, the reward granting section 2021 notifies the POS terminal 10 of a normal point amount (basic points) as the granted points.

Thereby, when the transaction performed with the POS terminal 10 satisfies the condition of the promotion set in the promotion master file M2, the POS terminal 10 and the management server 20 grant the customer the points obtained by performing addition or multiplication of the normal points with the special points.

Hereinafter, operations of the POS terminal 10, the management server 20 and the operation terminal 30 are described.

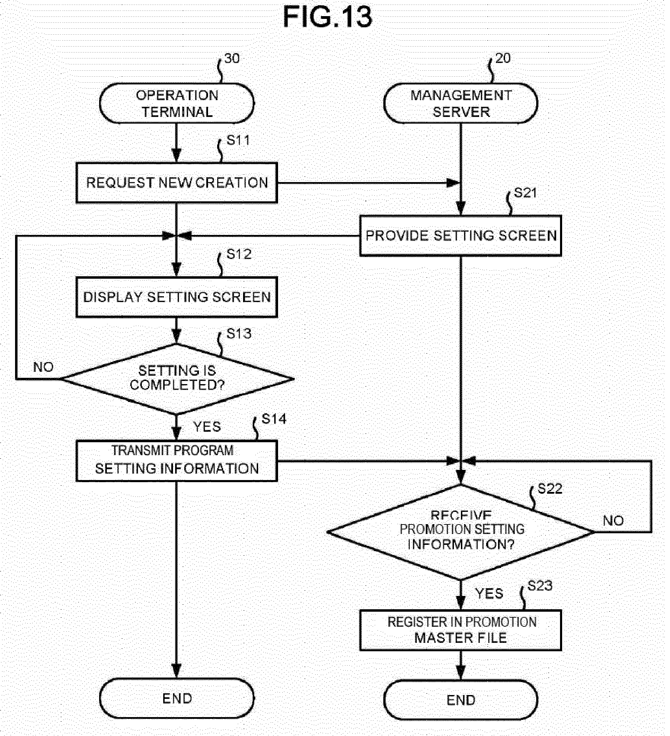

First, with reference to Fig. 13, a promotion setting process executed by the management server 20 and the operation terminal 30 is described. Fig. 13 is a flowchart depicting the promotion setting process executed by the management server 20 and the operation terminal 30.

If a predetermined operation is performed with the operation section 306, the CPU 301 of the operation terminal 30 accesses the management server 20 to request new creation of a promotion (Act S11). If the access in Act S11 is received, the setting screen supply section 2011 of the management server 20 provides the setting screen G1 for the operation terminal 30 which is an access source (Act S21).

The setting screen display section 3011 of the operation terminal 30 displays the setting screen G1 provided from the management server 20 on the display device 307 (Act S12). The user of the operation terminal 30 can input various settings such as the implementation period and the applicable condition of the promotion to be newly created through the setting screen G1 displayed on the display device 307. If the input of various settings is finished, the user of the operation terminal 30 instructs completion of the setting by operating the confirming button B11 or the like.

The setting screen display section 3011 of the operation terminal 30 stands by until the instruction of the completion of the setting is received (No in Act S13), and if the completion of the setting is instructed (Yes in Act S13), the flow proceeds to the process in Act S14. In Act S14, the setting screen display section 3011 transmits the content set (input) in the setting screen G1 to the management server 20 as the promotion setting information (Act S14).

On the other hand, the setting management section 2012 of the management server 20 stands by until the promotion setting information is received (No in Act S22), and if the promotion setting information is received (Yes in Act S22), the flow proceeds to the process in Act S23. In Act S23, the setting management section 2012 registers the received promotion setting information in the promotion master file M2 (Act S23), and ends the present process.

As a result, the user of the operation terminal 30 can set a new promotion via the setting screen G1 displayed on the display section 307.

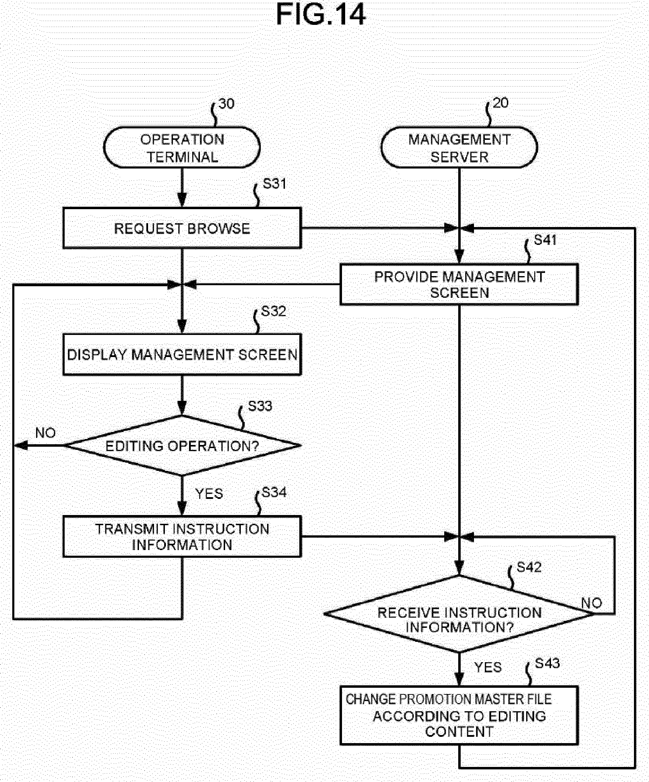

Next, with reference to Fig. 14, a promotion management process executed by the management server 20 and the operation terminal 30 is described. Fig. 14 is a flowchart depicting the promotion management process executed by the management server 20 and the operation terminal 30.

If a predetermined operation is performed through the operation section 306, the CPU 301 of the operation terminal 30 accesses the management server 20 to request to browse the promotion (Act S31). If the access in Act S31 is received, the management screen supply section 2013 of the management server 20 refers to the promotion setting information registered in the promotion master file M2 and provides the management screen G2 for the operation screen 30 which is the access source (Act S41).

The management screen display section 3012 of the operation terminal 30 displays the management screen G2 provided from the management server 20 on the display device 307 (Act S32). The user of the operation terminal 30 can confirm the content of the promotion (promotion setting information) being set at present through the management screen G2 displayed on the display device 307. The user of the operation terminal 30 can delete the promotion setting information and change the setting content through the management screen G2 displayed on the display device 307.

The management screen display section 3012 of the operation terminal 30 determines whether or not the editing operation such as deletion of the promotion setting information, change of the setting or the like is performed via the management screen G2 (Act S33). If it is determined that the editing operation is performed (Yes in Act S33), the management screen display section 3012 transmits the instruction information for instructing the content of the editing operation to the management server 20 (Act S34), and then the flow returns to the process in Act S32. If no editing operation is performed (No in Act S33), the management screen display section 3012 continues to display the management screen G2.

The setting management section 2012 of the management server 20 stands by until the instruction information is received (No in Act S42), and if the instruction information is received (Yes in Act S42), the flow proceeds to the process in Act S43. In Act S43, the setting management section 2012 changes the corresponding promotion setting information in the promotion master file M2 according to the edited content indicated by the instruction information (Act S43). Then, the management screen supply section 2013 of the management server 20 returns the process to Act S41 to provide the management screen G2 after change according to the edited content for the operation terminal 30.

As a result, the user of the operation terminal 30 can confirm the promotion being set at present through the management screen G2 displayed on the display device 307 or can change the setting content of the promotion. If an instruction to create a promotion is instructed through the management screen G2, a process similar to the promotion setting process described in Fig. 13 is performed by the management server 20 and the operation terminal 30.

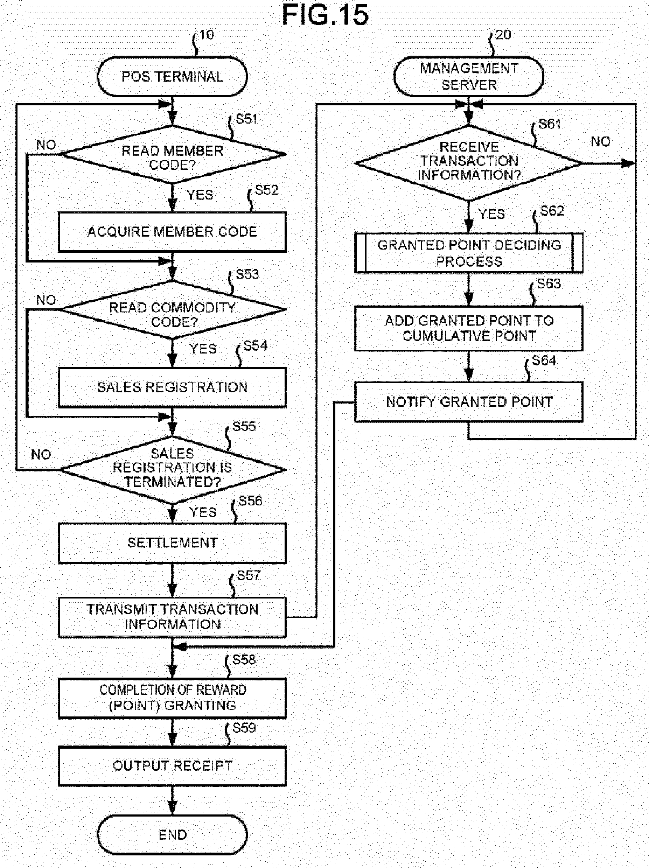

Next, with reference to Fig. 15, a reward granting process executed by the POS terminal 10 and the management server 20 is described. Fig. 15 is a flowchart depicting the reward granting process executed by the POS terminal 10 and the management server 20.

First, the member code acquisition section 1011 of the POS terminal 10 determines whether or not the member code is read by the card reader 18 (Act S51). If it is determined that the member code is read (Yes in Act S51), the member code acquisition section 1011 acquires the member code (Act S52) and then the flow proceeds to the process in Act S53.

If no member code is read (No in Act S51), the sales registration section 1012 determines whether or not the commodity code is read by the scanner 19 (Act S53). Here, if it is determined that the commodity code is read (Yes in Act S53), the sales registration section 1012 executes the sales registration for the commodity identified by the commodity code (Act S54), and then the flow proceeds to the process in Act S55.

If no commodity code is read (No in Act S53), the CPU 101 of the POS terminal 10 determines whether or not the end of sales registration is instructed through the keyboard 14 (closing key 141) (Act S55). If it is determined that the end of the sales registration is instructed (Yes in Act S55), the CPU 101 of the POS terminal 10 proceeds to the process in Act S56. If the end of the sales registration is not instructed (No in Act S55), the CPU 101 of the POS terminal 10 returns to the process in Act S51.

Next, if the start of the settlement process is instructed via the keyboard 14 (closing key 141), the settlement processing section 1013 of the POS terminal 10 executes the settlement process based on the data of each commodity on which the sales registration is performed (Act S56). Next, the reward granting section 1014 generates the transaction information including the acquired member code, commodity code of each commodity subjected to the sales registration, and the total amount of the commodities, and transmits the transaction information to the management server 20 (Act S57).

On the other hand, the reward granting section 2021 of the management server 20 is waiting to receive transaction information (No in Act S61). If the transaction information is received (Yes in Act S61), a granted point deciding process is executed (Act S62).

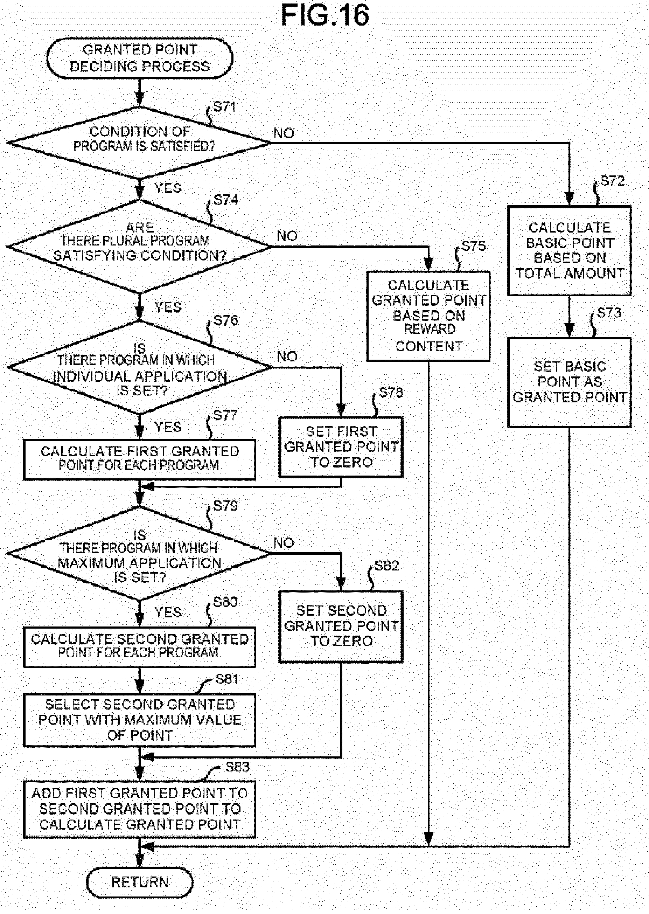

Here, Fig. 16 is a flowchart depicting the granted point deciding process executed by the reward granting section 2021.

The reward granting section 2021 of the management server 20 determines whether or not the transaction performed with the POS terminal 10 satisfies the condition of the promotion setting information registered in the promotion master file M2 based on the transaction information received from the POS terminal 10 (Act S71). Specifically, the reward granting section 2021 determines whether or not there is a promotion (promotion setting information) satisfying the condition of the characteristics of the customer specified from the transaction date and time and the member code included in the transaction information in the promotion master file M2.

If no promotion satisfying the condition exits (No in Act S71), the reward granting section 2021 calculates the basic points based on the total amount included in the transaction information (Act S72). Then, the reward granting section 2021 sets the calculated basic points as the granted points (Act S73), and proceeds to the process in Act S63 in Fig. 15.

In the present process, if no promotion satisfying the condition exists, the basic points are set as the granted points. However, the present invention is not limited thereto, and the granted points may be zero. For example, since it is not possible to give the points to a customer who is not registered as the member, the granted points are set to zero in such a case.

If there is the promotion satisfying the condition (Yes in Act S71), the reward granting section 2021 determines whether or not there are plural promotions satisfying the condition (Act S74). If there is one promotion satisfying the condition (No in Act S74), the reward granting section 2021 calculates the granted points based on the reward content of the promotion (Act S75), and then proceeds to the process in Act S63.

On the other hand, if there are plural promotions satisfying the condition (Yes in Act S74), the reward granting section 2021 determines whether or not there is the promotion in which the "individual application" is set among the promotions (Act S76). If there is the promotion in which the "individual application" is set (Yes in Act S76), the reward granting section 2021 calculates the first granted points for each promotion (Act S77) and proceeds to the process in Act S79. If no promotion in which the "individual application" is set exists (No in Act S76), the reward granting section 2021 sets the first granted points to zero (Act S78) and proceeds to the process in Act S79.

Subsequently, the reward granting section 2021 determines whether or not there is the promotion in which the "maximum application" is set among a plurality of the promotions satisfying the condition (Act S79). If there is the promotion in which the "maximum application" is set (Yes in Act S79), the reward granting section 2021 calculates the second granted points for each promotion (Act S80). The reward granting section 2021 selects one second granted point amount having the largest value among the calculated second granted points (Act S81), and then proceeds to the process in Act S83. If no promotion in which the "maximum application" is set exists (No in Act S79), the reward granting section 2021 sets the second granted points to zero (Act S82) and proceeds to the process in Act S83.

Next, the reward granting section 2021 calculates a value obtained by adding the first granted points and the second granted points as the granted points (Act S83), and then proceeds to the process in Act S63 in Fig. 15.

Returning again to Fig. 15, the reward granting section 2021 searches the member master file M1 for the data entry corresponding to the member code included in the transaction information, adds the granted points to the cumulative points of the searched data entry (Act S63).

The reward granting section 2021 notifies the POS terminal 10 transmitting the transaction information of the value of the calculated granted points (Act S64).

The reward granting section 1014 of the POS terminal 10 determines that the granting of the reward (point) is finished (Act S58) if the notification of the granted point is received from the POS terminal 10. Next, the printing control section 1015 of the POS terminal 10 prints a receipt including the details of the commodity on which the sales registration is performed, the content of the settlement process, the value of the granted points, and the like (Act S59), and ends the present process.

As described above, according to the present embodiment, the management server 20 cooperates with the operation terminal 30 to provide the operation screen for supporting the setting and management of the promotion that provides the reward to the user who operates the operation terminal 30. As a result, the user who operates the operation terminal 30 can easily create and manage the promotion, thereby improving convenience. Since it is possible to set the combination of a plurality of promotions with overlapping implementation periods, various promotions can be realized.

The management server 20 cooperates with the POS terminal 10 to grant the customer the reward content set in the promotion if the condition relating to the transaction performed with the POS terminal 10 satisfies a preset condition of the promotion. Furthermore, the management server 20 determines the reward content based on the reward content and the application method set for each of the promotions when there are plural promotions satisfying the condition, and grants the customer the reward content. Thus, even when a plurality of the promotions with overlapping implementation periods is set in a combined manner, the reward content to be granted can be decided based on the application method set for each of the promotions, thereby realizing plural promotions.

As described above, while certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention. The accompanying claims and their equivalents are intended to cover such forms or modifications as would fall within the scope of the invention.

For example, in the above-described embodiment, the member code is acquired while the sales registration of the commodity is performed, but the timing at which the member code is acquired is not limited as long as the member code is acquired during the transaction. For example, the member code may be acquired during a period from the operation on the closing key 141 to the operation on the cash total key 142.

In the above-described embodiment, the points are granted as the reward to be granted to the customer, but the reward content is not limited to the points. For example, services such as price reduction or a discount may be granted as the reward. In this case, an amount reduced from the total amount of the commodity or a discount rate is set as the reward content. The reward granting section 2021 of the management server 20 notifies the POS terminal 10 of a price reduction amount (discount amount) decided as the reward content in above-described Act S64. The reward granting section 1014 of the POS terminal 10 controls the settlement processing section 1013 to perform the settlement with a value obtained by subtracting the amount notified from the management server 20 from the total amount. In a case of combining the points to be granted and the price reduction (discount) together, for example, by multiplying the points by a predetermined conversion rate, the promotion with the maximum application may be selected by converting the points to a value in the same standard as the price reduction amount and the discount amount and then comparing the values thereof.

For example, the reward content may be an item such as a souvenir or novelty goods. In this case, a name of the article or the like for designating the article is set as the reward content. The reward granting section 2021 of the management server 20 notifies the POS terminal 10 of the article name decided as the reward content in the above-described Act S64. The reward granting section 1014 of the POS terminal 10 prompts a store clerk to grant the corresponding article by displaying the name of the article notified from the management server 20 on the first display device 15.

In the above-described embodiment, granting the customer (member) who is registered as the member the reward is described, but the present invention is not limited thereto, and a granting a customer who is not the member the reward (for example, discount) may be described.

Furthermore, in the above-described embodiment, the setting and management of the promotion is performed using the operation terminal 30, but the present invention is not limited thereto. For example, the setting and management of the promotion may be performed using the POS terminal 10 or the management server 20. In this case, it is assumed that the information processing apparatus such as the POS terminal 10 and the management server 20 has the same functional components as the operation terminal 30.

In the above embodiment, the reward granting section 2021 of the management server 20 decides the reward content (granted points). However, the present invention is not limited thereto, for example, the reward granting section 1014 of the POS terminal 10 may decide the reward content. In this case, the reward granting section 1014 of the POS terminal 10 has the same function as the reward granting section 2021, so that the reward content can be decided with the POS terminal 10. The member master file M1 and the promotion master file M2 may be stored in an external device such as the management server 20 or may be stored in the POS terminal 10.

In the above embodiment, the management server 20 manages the promotions implemented in the same retail store. However, the present invention is not limited thereto, and the management server 20 may manage the promotions implemented in each of plural retail stores. In this case, the management server 20 may manage, for example, the same promotion master file M2 common to all the retail stores. The promotion master file M2 may be managed separately for each retail store. In the latter case, the management server 20 uses the promotion master file M2 used in a retail store where the POS terminal 10 which is the access source is placed to provide the management screen G2 and to perform the granted point deciding process.

The programs executed by each device of the foregoing embodiment may be incorporated into a storage medium (ROM or HDD) of each device to be provided; however, the present invention is not limited to this. The programs may be recorded in a computer-readable recording medium such as a CD-ROM, a FD (Flexible Disk), a CD-R, a DVD (Digital Versatile Disk) and the like in the form of installable or executable file to be provided. Furthermore, the storage medium is not limited to a medium independent of a computer or an embedded system and also contains a storage medium that stores or temporarily stores the programs by downloading the programs transmitted through a LAN or an Internet.

Further, the programs executed by each device of the foregoing embodiment are stored in a computer connected with a network such as the Internet and downloaded via the network to be provided or may be supplied or distributed via the network such as the Internet.

## Claims

1. A server for determining a reward based on a transaction, the server comprising:
a storage device that stores promotion setting information including, for each of a plurality of promotions for granting rewards to a customer:
at least one condition under which the corresponding promotion is implemented,
a reward content to be granted to the customer in connection with the corresponding promotion, and
an application method indicating how the reward content is to be granted to the customer when the at least one condition of the corresponding promotion overlaps with the at least one condition of another promotion;
a communication interface for communicating data with a point of sale (POS) device; and
a processor programmed to:
receive, from the POS device via the communication interface, transaction data corresponding to a transaction performed by the customer,
determine, based on the received transaction data, whether the corresponding transaction satisfies the stored at least one condition for each of the plurality of promotions,
when the transaction satisfies the stored at least one condition for more than one of the plurality of promotions, determine the total reward content to be granted for each promotion for which the corresponding at least one condition is satisfied, based on the corresponding stored application method, and
output reward information indicating the total reward content for each promotion for which the corresponding at least one condition is satisfied.

2. The server according to claim 1, wherein
the reward content for each promotion is expressed quantitatively, and
if the stored application method for one of the promotions for which the corresponding at least one condition is satisfied is a maximum application method, the processor determines that the total reward content for that promotion is the maximum reward content out of each promotion for which the corresponding at least one condition is satisfied.

3. The server device according to claim 1 or 2, wherein
if the stored application method for one of the promotions for which the corresponding at least one condition is satisfied is an individual application method, the processor determines that the total reward content for that promotion is the reward content stored for that promotion.

4. The server according to any one of claims 1 to 3, wherein the processor outputs the reward information indicating the total reward content by updating a point account of the customer.

5. The server according to any one of claims 1 to 4, wherein the processor outputs the reward information indicating the total reward content by transmitting information to the POS device causing the POS device to display information indicating an item corresponding to the total reward content.

6. The server according to any one of claims 1 to 5, wherein the processor outputs the reward information indicating the total reward content by transmitting information indicating a discount to be applied in settling the transaction.

7. The server according to any one of claims 1 to 6, wherein the processor is further programmed to:
receive an instruction to update the promotion setting information, and
control the storage device to update the promotion setting information in accordance with the received instruction.

8. A method for determining a reward based on a transaction, the method comprising:
storing promotion setting information including, for each of a plurality of promotions for granting rewards to a customer:
at least one condition under which the corresponding promotion is implemented,
a reward content to be granted to the customer in connection with the corresponding promotion, and
an application method indicating how the reward content is to be granted to the customer when the at least one condition of the corresponding promotion overlaps with the at least one condition of another promotion;
receive, from a point of sale (POS) device, transaction data corresponding to a transaction performed by the customer;
determining, based on the received transaction data, whether the corresponding transaction satisfies the stored at least one condition for each of the plurality of promotions;
when the transaction satisfies the stored at least one condition for more than one of the plurality of promotions, determining the total reward content to be granted for each promotion for which the corresponding at least one condition is satisfied, based on the corresponding stored application method; and
outputting reward information indicating the total reward content for each promotion for which the corresponding at least one condition is satisfied.

9. The method according to claim 8, wherein
the reward content for each promotion is expressed quantitatively, and
if the stored application method for one of the promotions for which the corresponding at least one condition is satisfied is a maximum application method, the total reward content for that promotion is determined to be the maximum reward content out of each promotion for which the corresponding at least one condition is satisfied.

10. The method according to claim 8 or 9, wherein
if the stored application method for one of the promotions for which the corresponding at least one condition is satisfied is an individual application method, the total reward content for that promotion is determined to be the reward content stored for that promotion.

11. The method according to any one of claims 8 to 10, wherein
outputting the reward information indicating the total reward content includes updating a point account of the customer.

12. The method according to any one of claims 8 to 11, wherein
outputting the reward information indicating the total reward content includes transmitting information to the POS device causing the POS device to display information indicating an item corresponding to the total reward content.

13. The method according to any one of claims 8 to 12, wherein
outputting the reward information indicating the total reward content includes transmitting information indicating a discount to be applied in settling the transaction.

14. The method according to any one of claims 8 to 13, further comprising:
receiving an instruction to update the promotion setting information; and
updating the stored promotion setting information in accordance with the received instruction.

15. A non-transitory computer readable medium storing a program causing a computer to execute the method according to any one of claims 8 to 14.
